(19) Europäisches Patentamt
European Patent Office
Office européen des brevets

(11) **EP 0 629 861 B1**

(12) **EUROPÄISCHE PATENTSCHRIFT**

(45) Veröffentlichungstag und Bekanntmachung des Hinweises auf die Patenterteilung:
**05.08.1998  Patentblatt 1998/32**

(51) Int Cl.⁶: **G01P 3/66**

(21) Anmeldenummer: **94102750.0**

(22) Anmeldetag: **24.02.1994**

(54) **Vorrichtung zur Messung der Geschwindigkeit von Landfahrzeugen**

Apparatus for measuring the speed of land vehicles

Dispositif de mesure de la vitesse des véhicules terrestres

(84) Benannte Vertragsstaaten:
**DE FR GB**

(30) Priorität: **18.06.1993  DE 4320167**

(43) Veröffentlichungstag der Anmeldung:
**21.12.1994  Patentblatt 1994/51**

(73) Patentinhaber: **STN ATLAS Elektronik GmbH**
**D-28305 Bremen (DE)**

(72) Erfinder:
• **Becker, Gunnar, Dipl.-Geophys.**
  **D-28199 Bremen (DE)**
• **Hansen, Karl-Emil**
  **D-27283 Verden (DE)**
• **Klemp, Jürgen, Dipl.-Ing.**
  **D-28832 Achim (DE)**
• **Tummoscheit, Günter, Dipl.-Ing.**
  **D-28876 Oyten (DE)**

(56) Entgegenhaltungen:
DE-A- 2 345 106        GB-A- 2 056 688
GB-A- 2 094 981        US-A- 3 860 869

• **PATENT ABSTRACTS OF JAPAN vol. 7, no. 176 (P-214) (1321) 4. August 1983 & JP-A-58 080 559 (SHINGIJIYUTSU KAIHATSU JIGIYOUDAN)**

**Beschreibung**

Die Erfindung betrifft eine Vorrichtung zur Messung der Geschwindigkeit von Landfahrzeugen der im Oberbegriff des Anspruchs 1 definierten Gattung.

Vorrichtungen zur Geschwindigkeitsmessung im Straßenverkehr basieren derzeit im wesentlichen auf aktiven Systemen, wie Radar und Lichtschranken. Für Verkehrslenkungszwecke werden Induktionsschleifen sowie kompensierte und nichtkompensierte Magnetdetektoren eingesetzt, die in die Fahrbahn eingebaut werden. Wegen der damit verbundenen erheblichen baulichen Maßnahmen ist ihre Anwendung jedoch sehr beschränkt.

Bei einer Meßvorrichtung der eingangs genannten Art (DE 23 45 106 A1) werden als Sensoren optische Sonden verwendet, die die Variation des Reflexionsgrades der Oberfläche des vorbeifahrenden Fahrzeugs erfassen. In der Auswerteeinheit wird zur Korrelation das von der ersten Sonde kommende elektrische Ausgangssignal so lange verzögert, bis es dem Ausgangssignal von der zweiten Sonde gleicht. Die Verzögerungszeit ist dann die Zeitverschiebung, aus der mit dem gegebenen Abstand der beiden Sonden die Fahrzeuggeschwindigkeit berechnet wird. Optische Sonden erfordern jedoch einen relativ großen Installationsaufwand und sind wenig robust und anfällig gegen Verschmutzung, so daß die Meßvorrichtung beim Einsatz zur Geschwindigkeitsmessung im Straßenverkehr nicht ohne erhebliche Wartungsarbeiten auskommt.

Bei einer ebenfalls bekannten Meßvorrichtung zur Messung der Geschwindigkeit eines auf einem Fahrweg sich bewegenden Fahrzeugs (US 3 860 869) ist ein einziges Magnetometer im Querabstand von dem Fahrweg so plaziert, daß es die vertikale Komponente der Erdmagnetfeldverzerrung, die durch das vorbeifahrende Fahrzeug hervorgerufen wird, mißt. In der Auswerteeinheit wird die verstrichene Zeit zwischen dem Auftreten des Amplitudenmaximums und des halben Maximums im elektischen Ausgangssignal des Magnetometers gemessen und die in dieser Zeit vom Fahrzeug zurückgelegte Distanz bestimmt. Aus diesen beiden Größen wird die Fahrzeuggeschwindigkeit errechnet.

Bei einer bekannten Geschwindigkeitsmeßvorrichtung für Flugzeuge (DE 32 09 235 A1) sind an nach vorn und hinten gerichteten, flugzeugfesten Stangen zwei Magnetfeldsensoren angeordnet. Die beiden Magnetfeldsensoren nehmen abhängig von der Zeit unterschiedliche Werte der Magnetfeldsstärke des lokal schwankenden Erdmagnetfeldes auf und erzeugen ein entsprechendes elektrisches Ausgangssignal. Die Ausgangssignale der beiden Magnetfeldsensoren werden verstärkt und der Auswerteeinheit zugeführt, in welcher sie einer Kreuzkorrelation unterzogen werden. Aus der durch die Kreuzkorrelation ermittelten Zeit- oder Phasenverschiebung zwischen den Ausgangssignalen und dem räumlichen Abstand der beiden Magnetfeldsensoren am Flugzeug wird fortlaufend die Fluggeschwindigkeit bestimmt werden. Diese Meßvorrichtung soll auch für Landfahrzeuge einsetzbar sein.

Der Erfindung liegt die Aufgabe zugrunde, eine Vorrichtung zur Messung der Geschwindigkeit von Landfahrzeugen der eingangs genannten Art so zu verbessern, daß sie genügend robust zur Geschwindigkeitsmessung im Straßenverkehr ist und ausreichend genaue Meßergebnisse liefert. Außerdem soll die Meßvorrichtung schnell und mit geringem Montageaufwand installierbar sein und keine Wartungs- und Pflegearbeiten erfordern.

Die Aufgabe ist bei einer Vorrichtung der im Oberbegriff des Anspruchs 1 angegebenen Gattung erfindungsgemäß durch die Merkmale im Kennzeichenteil des Anspruchs 1 gelöst.

Bei der erfindungsgemäßen Meßvorrichtung werden nicht, wie bei der bekannten, zuletzt beschriebenen Meßvorrichtung, die lokalen Schwankungen des vorhandenen Erdmagnetfelds mittels zweier am Fahrzeug räumlich getrennt angeordneter Magnetfeldsensoren erfaßt, sondern die am Ort von zwei räumlich getrennt und fest installierten Magnetfeldsensoren auftretenden Störungen des Erdmagnetfelds, die durch das vorbeifahrende Fahrzeug verursacht werden. Diese Störungen im ansonsten lokal konstanten Erdmagnetfeld können sehr viel besser detektiert und ausgewertet werden als die Feldverteilung des Erdmagnetfeldes im Verlauf einer Fahrstrecke. Die Fahrgeschwindigkeit spielt dabei für die Genauigkeit der Detektion und Auswertung keine Rolle, so daß sowohl sehr langsam als auch sehr schnell fahrende Fahrzeuge mit gleich engen Meßtoleranzen vermessen werden. Die beiden Magnetfeldsensoren werden am Straßenrand aufgestellt oder dort eingegraben, benötigen also keinerlei Straßenbauarbeiten, wie diese bei der Anordnung von Magnetdetektoren in der Fahrstraße selbst erforderlich wären. Installationsmaßnahmen an den Fahrzeugen sind nicht notwendig. Magnetfeldsensoren sind robust und unempfindlich gegen Verschmutzung, so daß sie ohne Wartungsanforderungen in rauher Betriebsumgebung eingesetzt werden können. Durch die erfindungsgemäße Ausbildung der Auswerteeinheit ist der Softwareaufwand wesentlich geringer als bei der Ermittlung der zeitlichen Verschiebung zwischen den Ausgangssignalen mittels Kreuzkorrelation, wie diese bei den eingangs beschriebenen bekannten Meßvorrichtungen durchgeführt wird. Die Meßgenauigkeit ist dabei keinesfalls geringer, eher höher und wird dann noch wesentlich verbessert, wenn gemäß einer bevorzugten Ausführungsform der Erfindung eine Vielzahl von Schwellwerten vorgegeben wird und aus der Vielzahl von Zeitdifferenzwerten bezüglich des Über- und Unterschreitens der Schwellwerte der Medianwert ermittelt sowie das arithmetische Mittel von den dem Medianwert am nächsten liegenden Zeitdifferenzwerten gebildet wird.

Vorteilhafte Ausführungsformen der erfindungsgemäßen Meßvorrichtung mit zweckmäßigen Ausgestaltungen und Verbesserungen der Erfindung ergeben sich aus den weiteren Ansprüchen.

Um im dichten Verkehrsfluß die Einzelfahrzeuge zuverlässig zu detektieren und deren Geschwindigkeit zu erfassen, ist gemäß einer bevorzugten Ausführungsform der Erfindung der gegenseitige Abstand der Magnetfeldsensoren in Längsrichtung der Fahrstraße gleich oder kleiner gewählt als die Hälfte eines angenommenen Minimalabstands aufeinanderfolgender Fahrzeuge. Damit ist zuverlässig sichergestellt, daß auch bei nicht unmittelbar am rechten Straßenrand sondern in etwas größerem Abstand von der Fahrstraße angeordneten Magnetfeldsensoren keine Überschneidungen von Störungen im Erdmagnetfeld in den einzelnen Magnetfeldsensoren auftreten, die von dicht aufeinanderfolgenden Fahrzeugen hervorgerufen werden. In der Praxis hat sich dabei ein Abstand von ca. 5 m unter normalen Verkehrsverhältnissen als optimal herausgestellt.

In einer bevorzugten Ausführungsform der Erfindung werden dreidimensional empfindliche Magnetfeldsensoren, sog. 3 D-Magnetfeldsensoren, verwendet, die in drei orthogonalen Koordinaten Störungen im Erdmagnetfeld erfassen. Das elektrische Ausgangssignal eines jeden 3 D-Magnetfeldsensors wird durch Vektoraddition der Ausgangssignale der drei Sensorkomponenten gebildet. Durch diese Vektoraddition wird immer eine zur Auswertung ausreichend hohe Signalamplitude aufgrund der vom Fahrzeug hervorgerufenen Magnetfeldstörungen erhalten, unabhängig davon, ob das Fahrzeug aufgrund seiner Bauweise eine größere Verzerrung des Erdmagnetfelds in der z-, y- oder x-Achse hervorruft.

Die Erfindung ist anhand eines in der Zeichnung dargestellten Ausführungsbeispiels im folgenden näher beschrieben. Es zeigen:

Fig. 1    eine schematische Darstellung einer Draufsicht einer von Fahrzeugen befahrenen Fahrstraße mit an dieser angeordneter Vorrichtung zum Messen der Fahrzeuggeschwindigkeit,

Fig. 2    eine graphische Darstellung der Ausgangssignale zweier Magnetfeldsensoren in der Meßvorrichtung in Fig 1.

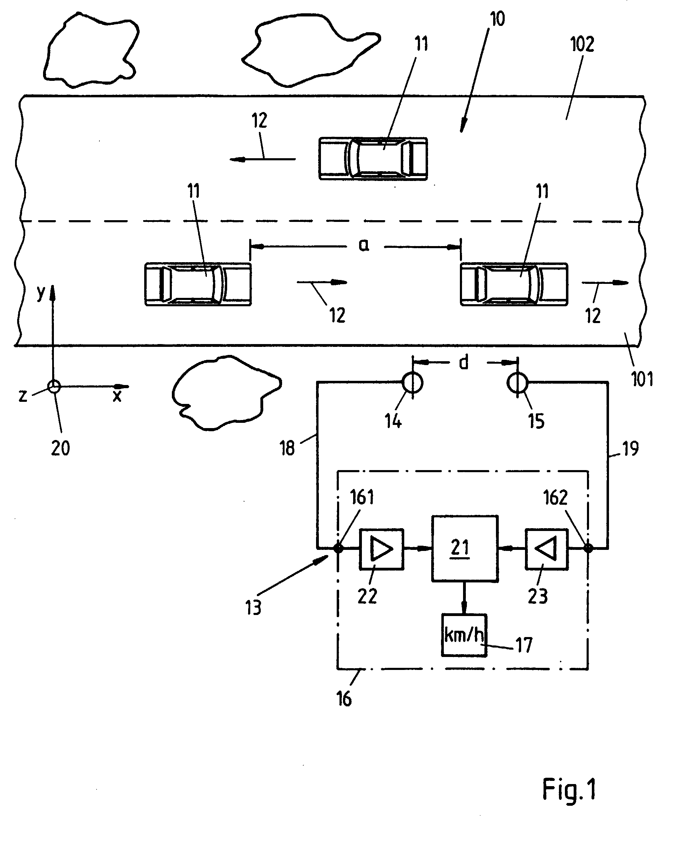

In Fig. 1 ist mit 10 eine Fahrstraße skizziert, die zwei Fahrbahnen 101 und 102 für entgegengesetzte Fahrtrichtungen aufweist. Die auf der Fahrstraße 10 fahrende Fahrzeuge, hier Personenkraftwagen, sind mit 11 gekennzeichnet. Die Fahrtrichtung der Fahrzeuge 11 ist durch die Pfeile 13 angegeben. Zur Messung der Geschwindigkeit der auf der rechten Fahrbahn 101 fahrenden Fahrzeuge ist am rechten Rand der Fahrstraße 11 eine insgesamt mit 13 bezeichnete Geschwindigkeitsmeßvorrichtung angeordnet. Die Meßvorrichtung 13 besteht aus zwei Magnetfeldsensoren 14 und 15 und einem Elektronikkasten 16 mit Anzeigefeld 17 für die Fahrzeuggeschwindigkeit. Die beiden Magnetfeldsensoren 14, 15 werden entlang der Fahrstraße 10 so nahe wie möglich an dem Rand der Fahrbahndecke angeordnet und über Meßkabel 18, 19 mit den Eingängen 161 und 162 des Elektronikkastens 16 verbunden. Die Anordnung der Magnetfeldsensoren 14, 15 erfolgt dabei durch Aufsetzen auf den Erdboden oder durch geringfügiges Eingraben in den Erdboden. Die Magnetfeldsensoren 14, 15 sind als sog. 3 D-Magnetfeldsensoren dreidimensional empfindlich und werden in den Erdboden eingesetzt oder auf den Erdboden aufgestellt. Dabei können ihre drei Achsen mit den Koordinaten x, y, z des links in Fig. 1 angedeuteten orthogonalen Koordinatensystems 20 übereinstimmen, ist aber nicht Bedingung. Der in Längsrichtung der Fahrstraße 10, also in Richtung der x-Koordinate des Koordinatensystems 20, gesehene Abstand d der beiden Magnetfeldsensoren 14, 15 voneinander ist gleich oder kleiner gewählt als der Minimalabstand a aufeinanderfolgender Fahrzeuge 10. Bevorzugt wird der Abstand d gleich oder kleiner als die Hälfte des Fahrzeug-Minimalabstands a gewählt. In der Praxis hat sich dabei ein Abstand d von 5 m als optimal erwiesen.

Der Elektronikkasten 16 enthält eine Auswerteeinheit 21, die eingangsseitig über je einen Verstärker 22 bzw. 23 mit den Eingängen 161 und 162 des Elektronikkastens 16 verbunden ist. Ausgangsseitig ist die Auswerteeinheit 21 an das Anzeigefeld 17 angeschlossen. Die Auswerteeinheit 21 ermittelt aus den ihr nach Verstärkung in den Verstärkern 22, 23 zugeführten elektrischen Ausgangssignalen der beiden Magnetfeldsensoren 14, 15 die Zeitverschiebung zwischen diesen Ausgangssignalen und errechnet aus dieser und dem bekannten Abstand d der Magnetfeldsensoren 14, 15 die Fahrzeuggeschwindigkeit v gemäß

$$v = d / \frac{T1 + T2}{2} \qquad (1).$$

Die errechnete Fahrzeuggeschwindigkeit v wird durch entsprechende Ansteuerung des Anzeigefelds 17 von diesem angezeigt. Die zeitlichen Verschiebungen T1 und T2 werden noch nachfogend näher erläutert.

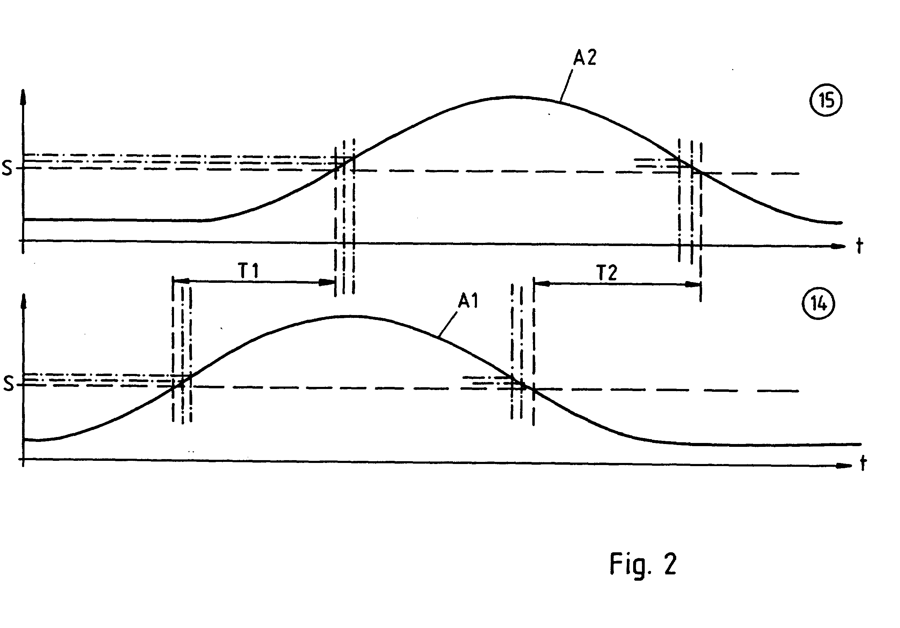

Zum Verständnis der Messung der Fahrgeschwindigkeit v wird auf Fig. 2 verwiesen. In den dort dargestellten Diagrammen ist der zeitliche Signalverlauf der Ausgangssignale des Magnetfeldsensors 14 (unteres Bild) und des Magnetfeldsensors 15 (oberes Bild) dargestellt. In bekannter Weise erfassen die beiden Magnetfeldsensoren 14, 15 das an ihrem Aufstellungsort vorhandene lokale Erdmagnetfeld. Dieses Magnetfeld ist konstant und wird durch ein vorbeifahrendes Fahrzeug 11 gestört. Diese Störung des Erdmagnetfeldes führt zu einem vorübergehenden Ansteigen und wieder Abfallen der Amplitude des Ausgangssignals der Magnetfeldsensoren 14, 15, wie dies in Fig. 2 zu sehen ist. Da das Fahrzeug 11 zunächst den Magnetfeldsensor 14 erreicht und danach erst den Magnetfeldsensor 15, tritt der Amplitudenbuckel im Ausgangssignal des Magnetfeldsensors 14 zeitlich früher auf als im Ausgangssignal des Magnetfeldsensors 15. Bei den hier verwendeten 3 D-Magnetfeldsensoren entspricht der in Fig. 2 dargestellte Signalverlauf dem Betrag der Amplitude des aus der Vektoraddition der drei von den Sensorkomponenten gelieferten Signalkomponenten. Die zeitliche Verschiebung der beiden Ausgangssignale der Magnetfeldsensoren 14, 15 wird nun in der Weise bestimmt, daß die Signalamplitude A1, A2 der beiden Ausgangssignale jeweils mit mindestens einem Schwellwert S verglichen werden. Dabei wird die Zeitdifferenz T1 zwischen den Überschreitungsstellen des Schwellwerts S durch die Signalamplituden A1 und A2 der beiden Ausgangssignale und die Zeitdifferenz T2 zwischen den Unterschreitungsstellen des Schwellwerts S durch die Signalamplituden A1 und A2 gemessen und das arithmetische Mittel dieser beiden Zeitdifferenzen T1, T2 gebildet. Die Division des räumlichen Abstandes d zwischen den Magnetfeldsensoren 14, 15 und des arithmetischen Mittels der beiden Zeitdifferenzen T1 und T2 ergibt gemäß Gl. (1) die Fahrzeuggeschwindigkeit v.

Zur Verbesserung der Meßgenauigkeit wird nicht nur ein einziger Schwellwert S, sondern - wie in Fig. 2 strichpunktiert dargestellt ist - eine Vielzahl von Schwellwerten festgelegt und in gleicher Weise wie beschrieben ausgewertet. Damit ergibt sich eine Vielzahl von Zeitdifferenzwerten sowohl für T1 als auch für T2, von denen der sog. Medianwert gebildet wird. Mit den dem Medianwert am nächsten liegenden Zeitdifferenzwerten wird dann gemäß Gl. (1) der arithmetische Mittelwert (T1 + T2)/2 und die Fahrzeuggeschwindigkeit v berechnet. Zur Definition des Medianwerts wird beispielsweise auf W. Gellert "Handbuch der Mathematik", Lizenzausgabe der Buch und Zeit Verlagsgesellschaft mbH, Köln, verwiesen.

**Patentansprüche**

1. Vorrichtung zur Messung der Geschwindigkeit von Landfahrzeugen mit zwei entlang einer Fahrstraße (10) neben dieser in Abstand (d) hintereinander angeordneten Sensoren (14, 15) und mit einer an den Sensoren (14, 15) angeschlossenen Auswerteeinheit (21), welche die Phasen- oder Zeitverschiebung der elektrischen Ausgangssignale der Sensoren (14, 15) bestimmt und daraus mit dem Abstand (d) der Sensoren (14, 15) die Fahrzeuggeschwindigkeit (v) berechnet, dadurch gekennzeichnet, daß die Sensoren als Magnetfeldsensoren (14, 15) ausgebildet sind, die von dem vorbeifahrenden Fahrzeug verursachte Störungen des Erdmagnetfeldes erfassen, und daß die Bestimmung der Zeitverschiebung der Ausgangssignale der beiden Magnetfeldsensoren (14, 15) in der Weise erfolgt, daß die Signalamplituden (A1, A2) der Ausgangssignale mit mindestens einem vorgegebenen Schwellwert (S) verglichen werden, daß die Zeitdifferenz (T1) zwischen dem Übersteigen des Schwellwertes (S) durch die Signalamplituden (A1, A2) der beiden Ausgangssignale und die Zeitdifferenz (T2) zwischen dem Unterschreiten des Schwellwertes (S) durch die Signalamplituden (A1, A2) der beiden Ausgangssignale gemessen wird und daß das arithmetische Mittel der gemessenen Zeitdifferenzen (T1, T2) als zeitliche Verschiebung der Ausgangssignale ausgegeben wird.

2. Vorrichtung nach Anspruch 1, dadurch gekennzeichnet, daß eine Vielzahl von Schwellwerten (S) vorgegeben wird, daß aus der Vielzahl von Zeitdifferenzwerten bezüglich des Über- und Unterschreitens der Schwellwerte (S) der Medianwert ermittelt wird und daß das arithmetische Mittel von den dem Medianwert am nächsten liegenden Zeitdifferenzwerten gebildet wird.

3. Vorrichtung nach Anspruch 1 oder 2, dadurch gekennzeichnet, daß die Magnetfeldsensoren (14, 15) dreidimensional empfindlich sind und daß das elektrische Ausgangssignal der Magnetfeldsensoren (14, 15) durch Vektoraddition der Ausgangssignale der drei Sensorkomponenten gebildet ist.

4. Vorrichtung nach einem der Ansprüche 1 bis 3, dadurch gekennzeichnet, daß der Abstand der Magnetfeldsensoren (14,15) von der Fahrstraße (10) möglichst klein ist.

5. Vorrichtung nach einem der Ansprüche 1 bis 4, dadurch gekennzeichnet, daß der gegenseitige Abstand (d) der Magnetfeldsensoren (14, 15) gleich oder kleiner ist als die Hälfte eines angenommenen Minimalabstandes (a) aufeinanderfolgender Fahrzeuge (11).

6. Vorrichtung nach Anspruch 5, dadurch gekennzeichnet, daß der gegenseitige Abstand der Magnetfeldsensoren (14, 15) etwa 5 m beträgt.

**Claims**

1. Apparatus for measuring the speed of land vehicles with two sensors (14, 15) arranged at a distance (d) one behind the other along a road (10) and next to this, and with an evaluation unit (21), which is connected to the sensors (14, 15), and which determines the phase and time displacement of the electric output signals of the sensors (14, 15) and calculates the vehicle speed (v) from this with the distance (d) between the sensors (14, 15), characterised in that the sensors are provided in the form of magnetic field sensors (14, 15), which detect interferences in the terrestrial magnetic field caused by the passing vehicle, and that determination of the time displacement of the output signals of the two magnetic field sensors (14, 15) is achieved in such a manner that the signal amplitudes (A1, A2) of the output signals are compared with at least one preset threshold value (S), that the time difference (T1) between the signal amplitudes (A1, A2) of the two output signals exceeding the threshold value (S) and the time difference (T2) between the signal amplitudes (A1, A2) of the two output signals falling short of the threshold value (S) are measured, and that the arithmetic mean of the measured time differences (T1, T2) is output as a temporal displacement of the output signals.

2. Apparatus according to Claim 1, characterised in that a plurality of threshold values (S) are pre-set, that the median value is determined from the plurality of time difference values relating to the thresholds (S) being exceeded and being fallen short of, and that the arithmetic mean is formed from the time difference values lying closest to the median value.

3. Apparatus according to Claim 1 or 2, characterised in that the magnetic field sensors (14, 15) are three-dimensionally sensitive, and that the electric output signal of the magnetic field sensors (14, 15) is formed by vector addition of the output signals of the three sensor components.

4. Apparatus according to one of Claims 1 to 3, characterised in that the distance of the magnetic field sensors (14, 15) from the road (10) is as short as possible.

5. Apparatus according to one of Claims 1 to 4, characterised in that the mutual distance (d) between the magnetic field sensors (14, 15) is equal to or less than half of an assumed minimum distance (a) between vehicles (11) following in succession.

6. Apparatus according to Claim 5, characterised in that the mutual distance between the magnetic field sensors (14, 15) amounts to about 5 m.

**Revendications**

1. Dispositif de mesure de la vitesse de véhicules terrestres, comportant deux capteurs (14, 15), disposés l'un derrière l'autre à une distance (d) le long d'une route (10) à côté de celle-ci et comportant une unité d'exploitation (21), raccordée aux capteurs (14, 15), qui détermine le déphasage ou le décalage dans le temps des signaux de sortie électriques des capteurs (14, 15), et calcule, à partir de ceci, avec la distance (d) des capteurs (14, 15), la vitesse (v) des véhicules, caractérisé en ce que les capteurs sont conformés en tant que capteurs de champ magnétique (14, 15), qui détectent des perturbations du champ magnétique terrestre , causées par le véhicule passant devant, et en ce que la détermination du décalage dans le temps des signaux de sortie des deux capteurs de champ magnétique (14, 15) s'effectue de manière que les amplitudes (A1, A2) des signaux de sortie sont comparées à au moins une valeur seuil (S) donnée, que la différence dans le temps (T1) entre le dépassement de la valeur seuil (S) par les amplitudes (A1, A2) des deux signaux de sortie et la différence dans le temps (T2) entre le passage au-dessous de la valeur seuil (S) par les amplitudes (A1, A2) des deux signaux de sortie soient mesurées et que la moyenne arithmétique des différences de temps (T1, T2) mesurées soit délivrée en tant que décalage dans le temps des signaux de sortie.

2. Dispositif selon la revendication 1, caractérisé en ce qu'est donné un grand nombre de valeurs seuil (S), en ce qu'à partir du grand nombre de valeurs différentielles de temps par rapport au dépassement et au sous-dépassement des valeurs seuil (S), est déterminée la valeur médiane et en ce qu'est formée la moyenne arithmétique des valeurs différentielles de temps la plus proches de la valeur médiane.

3. Dispositif selon la revendication 1 ou 2, caractérisé en ce que les capteurs de champ magnétique (14, 15) sont sensibles dans les trois dimensions et en ce que le signal de sortie des capteurs de champ magnétique (14, 15) est formé par addition vectorielle des signaux de sortie des trois composantes des capteurs.

4. Dispositif selon l'une des revendications 1 à 3, caractérisé en ce que la distance des capteurs de champ magnétique (14, 15) par rapport à la route (10) est aussi petite que possible.

5. Dispositif selon l'une des revendications 1 à 4, caractérisé en ce que la distance réciproque (d) des capteurs de champ magnétique (14, 15) est égale ou inférieure à la moitié d'une distance minimale (a) supposée de véhicules (11) successifs.

6. Dispositif selon la revendication 5, caractérisé en ce que la distance réciproque des capteurs de champ magnétique (14, 15) est environ égale à 5m.

Fig.1

Fig. 2